# EUROPÄISCHE PATENTSCHRIFT

(11) **EP 2 071 653 B1**
(45) Veröffentlichungstag und Bekanntmachung des Hinweises auf die Patenterteilung: **31.10.2012**
(21) Anmeldenummer: 08012983.6
(22) Anmeldetag: 18.07.2008
(51) Int. Cl.: H01M 8/02, H01M 8/24

(54) **Bipolarplatte beinhaltend Dichtungselement mit Positionierhilfe für MEA in einem Brennstoffzellenstapel**
Bipolar plate comprising gasket with positioning aid for MEA in a fuel cell stack
Plaque bipolaire comprenant un joint ayant une aide de positionnement pour MEA dans un empilement de piles à combustible

(30) Priorität: 14.12.2007 DE 102007060898
(43) Veröffentlichungstag der Anmeldung: 17.06.2009
(73) Patentinhaber: TB&C Outsert Center GmbH, 35745 Herborn (DE)
(72) Erfinder: Hölzel, Fabian, 35457 Lollar (DE); Fallenbeck, Wolfgang, 35457 Lollar (DE); Wetzels, Ralf, 42499 Hückeswagen (DE)
(74) Vertreter: Weilnau, Carsten

(56) Entgegenhaltungen:
- EP-A- 1 501 141
- DE-A1- 10 203 174
- DE-A1- 10 351 921
- US-A1- 2006 083 977

## Beschreibung

Die vorliegende Erfindung betrifft eine Bipolarplatte oder allgemein eine Elektroden- bzw. Busplatte für Brennstoffzellen- oder Elektrolyseurstapel mit in der Plattenebene verlaufenden Kanälen zur Führung von zumindest einem Reaktionsmedium und mit zumindest einer Durchgangsöffnung zur Zu- oder Abfuhr des Reaktionsmediums. Des Weiteren betrifft die Erfindung ein Dichtungselement zur Anordnung an der Bipolar- oder Elektrodenplatte.

### Stand der Technik

Brennstoffzellen ermöglichen die Umwandlung der chemischen Reaktionsenergie eines kontinuierlich zugeführten Brennstoffs und eines Oxidationsmittels in elektrische Energie. Eine Brennstoffzelleneinheit besteht aus zumindest zwei Elektroden, Anode und Katode, die durch eine Membran, insbesondere eine sogenannte Polymerelektrolytmembran oder Protonenaustauschmembran voneinander getrennt sind. Im Betrieb wird die Anode vom Brennstoff, etwa Wasserstoff, Methan, Methanol oder dergleichen umspült, der unter Abgabe von Elektronen katalytisch oxidiert. Die dabei gebildeten Ionen gelangen über die Membran in eine ein Oxidationsmittel, insbesondere Sauerstoff aufweisende Kammer. Dort erfolgt schließlich eine Reduktion des Oxidationsmittels.

Die infolge der katalytischen Oxidation des Brennstoffs an die Anode abgegebenen Elektronen, können über einen elektrischen Verbraucher an die Katode abgeleitet werden. Dort wird das Oxidationsmittel durch Aufnahme der an der Katode zur Verfügung gestellten Elektronen zu Anionen reduziert und reagiert gleichzeitig mit den durch die Membran zur Katode gewanderten Ionen zu einem Ausgangsprodukt, wie etwa Wasser.

Die maximale Zellspannung, die von einer einzelnen Brennstoffzelle erreicht werden kann, beträgt etwa 1,2 Volt. Um eine für kommerzielle Anwendungen ausreichende elektrische Leistung zur Verfügung zu stellen, werden daher mehrere Brennstoffzellen in einem Brennstoffzellenstapel elektrisch in Reihe geschaltet. Hierzu werden Anode und Katode benachbart anzuordnender Brennstoffzellen als integrierte Einheit, in Form einer Bipolarplatte ausgebildet, sodass zur Bildung eines Brennstoffzellenstapels oder Brennstoffzellenstacks Bipolarplatten und Membranen, bzw. Membran -Elektroden-Anordnungen (MEA) abwechselnd übereinander zu schichten sind.

Bei der Bildung eines Brennstoffzellenstapels ist insbesondere darauf zu achten, dass jede Brennstoffzelleneinheit insbesondere in ihren außenliegenden Randabschnitten gasundurchlässig ausgebildet ist.

So ist es im Stand der Technik, beispielsweise aus der DE 10 2006 054 849 A1 bekannt, eine Bipolarplatte nach außen vollständig durch zwei Dichtelemente, etwa eine Elastomerdichtung, abzudichten. Die Dichtelemente sollen insbesondere die Reaktionsmedien sicher voneinander trennen.

Ein solcher Montage- und Fertigungsprozess zur Schaffung eines Brennstoffzellenstapels gestaltet sich jedoch nach wie vor als verhältnismäßig aufwendig. Zwar können die außen an der Bipolarplatte anzubringenden Elastomer-Dichtungen unmittelbar an eine Membran-Elektroden-Einheit (MEA) angespritzt werden. Allerdings müssen für den Transport der Reaktionsmedien durch den Stapel hindurch in jeder Platte und in jeder Membran Durchgangsöffnungen für die Reaktionsmedien zu jeder Zelleneinheit vorgesehen werden. Das gasdichte Abdichten solcher Versorgungsöffnungen in den Platten und Membran-Elektroden-Anordnungen erfolgt oftmals durch manuelles Einlegen von zwischen Platte und MEA anzuordnenden Dichtungselementen, etwa O-Ringen.

Des Weiteren gestaltet es sich bei der Montage von Brennstoffzellenstapeln als schwierig, die empfindliche und in der Herstellung verhältnismäßig teure Membran positionsgenau zu platzieren. Das exakte und positionsgenaue Übereinanderstapeln der einzelnen Brennstoffzellenstapel-Komponenten ist jedoch absolut unerlässlich, um eine ausreichende Funktionssicherheit, und um einen hohen Wirkungsgrad des Brennstoffzellenstapels zu erzielen.

So ist aus der US 2006/0083977 A1 eine Separatorplatte bekannt, deren Außenränder von einer flexiblen Dichtung umschlossen werden. Die Kathodenseite der Platte als auch die Anodenseite der Platte sind dabei jeweils mit eigens hierfür vorgesehenen Dichtungsgliedern versehen.

In der EP 1 501 141 A1 ist ferner ein Brennstoffzellenseparator beschrieben, der eine spritzgegossene Dichtungsanordnung im Randbereich einer Separatoranordnung aufweist, deren Wasserstoff- oder Sauerstoffpassagen außerhalb der eigentlichen Separatorplatte liegen und im spritzgegossenen Dichtungsmaterial angeordnet sind.

Die DE 102 03 174 A1 offenbart schließlich eine aus Separatorplatten gebildete Stapelanordnung, die eine in eine Brenngasdurchführungsöffnung hineinragende Dichtung aufweisen.

### Aufgabe

Der vorliegenden Erfindung liegt daher die Aufgabe zugrunde, eine Bipolar- oder Elektrodenplatte für Brennstoffzellen- oder Elektrolyseurstapel zur Verfügung zu stellen, die besonders einfach und rationell zu einem Brennstoffzellenstapel zusammengefügt werden können. Zudem sollen die Bipolar- oder Elektrodenplatten in großer Stückzahl und unter Einsparung von Fertigungs- und Materialkosten für die industrielle Massenfertigung geeignet sein.

### Erfindung und vorteilhafte Wirkungen

Die der Erfindung zugrundeliegende Aufgabe wird mittels einer Bipolar- oder Elektrodenplatte gemäß Patentanspruch 1 sowie einem zugehörigen Dichtungselement für eine solche Platte gemäß Patentanspruch 14 gelöst. Vorteilhafte Ausgestaltungen der Erfindung sind in den zugehörigen abhängigen Ansprüchen angegeben.

Die erfindungsgemäße Platte für Brennstoffzellen- oder Elektrolyseurstapel weist in der Plattenebene verlaufende Kanäle zur Führung von zumindest einem Reaktionsmedium auf. Die Platte kann dabei beidseitig mit einer Kanalstruktur versehen und somit als Bipolarplatte ausgebildet sein. Die Erfindung umfasst gleichermaßen eine Bus- oder Elektrodenplatte, welche entweder als Anoden- oder Katodenplatte fungiert und an einem Endabschnitt des Brennstoffzellenstapels anzuordnen ist.

Die Bipolar- oder Elektrodenplatte weist zumindest eine Durchgangsöffnung zur Zufuhr oder Abfuhr des Reaktionsmediums auf, wobei im Bereich der Durchgangsöffnung ein zumindest bereichsweise in die Durchgangsöffnung hineinragendes Dichtungselement angeordnet ist. Dieses Dichtungselement weist einen schräg, vorzugsweise aber senkrecht zur Plattenebene verlaufenden Führungskanal für das Reaktionsmedium auf und ermöglicht ein gegenüber den Plattenzwischenräumen abgedichtetes Hindurchführen des Reaktionsmediums, entweder des Brennstoffs oder des Oxidationsmittels, senkrecht bzw. schräg zur Plattenebene, um sämtliche aufeinandergestapelten Brennstoffzelleneinheiten mit dem Reaktionsmedium zu versorgen.

Erfindungsgemäß ist vorgesehen, dass das Dichtungselement ein Oberteil und ein Unterteil aufweist, wobei das Oberteil von der Plattenebene hervorsteht, während das Unterteil zumindest abschnitts- und/oder bereichsweise innerhalb der Durchgangsöffnung der Platte zu liegen kommt. Dabei weist das Oberteil einen gegenüber der Durchgangsöffnung verbreiterten Abstützabschnitt auf, mit welchem sich das Dichtungselement an der Platte abstützt. Der Abstützabschnitt kann, bei einer im Wesentlichen zylindrischen Ausgestaltung des Dichtungselements radial nach außen verbreitert sein.

Er bildet eine Art Flansch, mit welchem das Oberteil des Dichtungselements mit der Oberseite der Platte in Anlagestellung gelangt und sich daran abstützt. Ferner bildet der Abstützabschnitt des Oberteils des Dichtungselements eine Auflage für eine benachbart und parallel zur Platte anzuordnende Membran, bzw. eine vorkonfektionierte Membran-Elektroden-Anordnung. Ferner ist vorgesehen, dass das Dichtungselement nicht nur eine Auflage hinsichtlich einer Positionierung der Membran oder MEA in Richtung senkrecht zur Plattenebene zur Verfügung stellt, sondern auch als eine Positionierhilfe zur positionsgenauen Ausrichtung und Positionierung der Membran oder MEA in der Ebene der Platine ausgebildet ist.

Ferner ist nach oben angrenzend an den Abstützabschnitt ein nach Art eines Zapfens ausgebildeter Fortsatz vorgesehen, welcher in Montagestellung eine in der Membran ausgebildete Durchgangsöffnung durchsetzt.

Das Dichtungselement erfüllt somit eine dreifache Funktion. Erstens kommt dem Dichtungselement eine Führungsfunktion zu, sodass das Reaktionsmedium im Wesentlichen senkrecht zur Plattenebene zu den übereinander oder nebeneinander angeordneten Brennstoffzelleneinheiten transportiert werden kann. Zweitens erfüllt das Dichtelement eine abdichtende Funktion für den innerhalb des Dichtelements verlaufenden Führungskanal, insbesondere gegenüber solchen Brennstoffzellenbereichen, in welchen das andere Reaktionsmedium vorliegt. Drittens stellt das bereits in einer Vormontage an der Platte anzuordnende Dichtungselement eine Justier-, Positionier- und Montagehilfe für die Membran oder Membran-Elektroden-Anordnung zur Verfügung.

Denn mittels der Justier- und Positionierfunktionalität des Dichtungselements kann hinreichend gewährleistet werden, dass eine benachbart zur Bipolar- oder Elektrodenplatte anzuordnende Membran oder Membran-Elektroden-Anordnung durch das Auflegen auf das Dichtungselements bzw. die darunter liegende Platte hinreichend exakt gegenüber der Platte positioniert ist. Mittels des Dichtungselements wird somit die Position der MEA, bzw. der Membran in der Plattenebene festgelegt.

Nach einer vorteilhaften Weiterbildung der Erfindung ist insbesondere vorgesehen, dass das Dichtungselement angrenzend an den Abstützabschnitt einen demgegenüber verjüngt ausgebildeten Fortsatz aufweist, welcher beim Aufeinanderstapeln von Bipolarplatten und Membran, bzw. MEA in einer in der Membran ausgebildeten Durchgangsöffnung zu liegen kommt. Dabei ist insbesondere vorgesehen, dass der Fortsatz des Abstützabschnittes des Dichtungselements die Membran, welche typischerweise eine Dicke von 50 bis 250 µm aufweist, durchsetzt.

Der Fortsatz bildet einen Endabschnitt des Oberteils des Dichtungselements und erstreckt sich vorzugsweise im Wesentlichen senkrecht zur Plattenebene. Die Erstreckung des Fortsatzes parallel zur Plattenebene ist dabei an den lichten Innendurchmesser der Durchgangsöffnung der Membran oder der MEA angepasst. Zum Zusammenfügen des Brennstoffzellenstapels ist es daher erforderlich, die Membran oder die MEA mit ihrer Durchgangsöffnung fluchtend zum Fortsatz des Oberteils des Dichtungselementes auszurichten und schließlich die Membran in Richtung senkrecht zur Plattenebene auf das an der Platte angeordnete Dichtelement und seinen Fortsatz aufzuschieben.

Mit dem Auflegen der Membran auf die mit dem erfindungsgemäßen Dichtungselement versehene Bipolar- oder Elektrodenplatte ist die Membran gleichzeitig pass- und positionsgenau gegenüber der Platte positioniert und fixiert. Hierdurch kann das Zusammenfügen und die gesamte Handhabung der einzelnen Komponenten einer Brennstoffzelle und eines Brennstoffzellenstapels wesentlich vereinfacht werden.

Nach einer Weiterbildung der Erfindung ist vorgesehen, dass das Dichtungselement die Durchgangsöffnung der Bipolar- oder Elektrodenplatte durchsetzt und ein dem Abstützabschnitt abgewandtes und von der Unterseite der Platte hervorstehendes Unterteil aufweist. An diesem Unterteil, insbesondere an seinem unteren Endabschnitt ist eine Aufnahme für den Fortsatz eines benachbart angeordneten Dichtungselements ausgebildet. Insoweit ist vorgesehen, dass das Dichtungselement an seinen oberhalb und unterhalb der Platte zu liegen kommende Endabschnitten zumindest jeweils einen Fortsatz und eine Aufnahme aufweist, welche miteinander korrespondieren.

Diese miteinander korrespondierenden Formschlusselemente, Aufnahme und Fortsatz ermöglichen, dass beim Übereinanderstapeln von mehreren Bipolarplatten die an diesen vorkonfektioniert angeordneten Dichtungselemente einander abdichtend und zumindest bereichsweise ineinandergreifen. Im Stoßbereich von einander anliegenden Dichtungselementen benachbarter Bipolarplatten kommt die Membran oder die MEA zu liegen. Diese wird mittels der Dichtelemente sowohl bezüglich ihrer Ausrichtung in der Plattenebene als auch senkrecht hierzu positioniert und fixiert.

Die Ausgestaltung von Fortsatz und Aufnahme an Ober- oder Unterteil eines Dichtungselements kann beliebig ausgestaltet sein. Es ist insoweit möglich, den Fortsatz entweder am freien Endabschnitt des Ober- oder des Unterteils anzuordnen, wobei dann die damit korrespondierende Aufnahme am Unter- bzw. Oberteil des Dichtungselements vorzusehen ist.

Mit dem zumindest bereichsweisen Ineinandergreifen von an benachbart anzuordnenden Bipolarplatten vorkonfektionierten Dichtungselementen kann zudem eine Teilereduktion einhergehen. Zur Bildung eines gasdicht verschlossenen Führungskanals eines Reaktionsmediums ist folglich nur noch ein einziges Dichtungselement pro Bipolarplatte erforderlich. Dabei ist es insbesondere von Vorteil, wenn das Dichtungselement bereits vorkonfektioniert an der Bipolarplatte oder Elektrodenplatte angeordnet ist, sodass die Dichtungselemente beim Zusammenfügen des Brennstoffzellenstapels keiner weiteren Handhabung bedürfen.

Des Weiteren kann vorgesehen sein, dass das Unterteil des Dichtungselements, welches von der Unterseite der Platte hervorragt, einen gegenüber der lichten Weite der Durchgangsöffnung der Platte verbreiterten Querschnitt aufweist. Insoweit ist denkbar, dass auch das Unterteil des Dichtungselements, ähnlich oder vergleichbar dem Oberteil, einen verbreiterten unteren Abstützabschnitt aufweist, wobei auch dieser untere Abstützabschnitt flanschartig verbreitert sein kann, sodass mittels oberem und unterem Abstützabschnitt das Dichtungselement in Richtung senkrecht zur Plattenebene an der Platte fixiert werden kann. Hiermit kann einer unbeabsichtigten Demontage eines vorkonfektioniert an einer Platte angeordneten Dichtungselements effektiv entgegengewirkt werden.

Nach einer besonders vorteilhaften Ausgestaltung der Erfindung ist vorgesehen, dass das Dichtungselement unter Verwendung eines Ein-, oder Mehrkomponenten-Spritzgussverfahrens an die Platte angespritzt ist. Hierdurch kann ein Metall-Kunststoff-Verbund unter Verwendung der sogenannten Outsert Technologie geschaffen werden. Bevorzugt ist hierbei vorgesehen, dass mittels eines anzuwendenden des Spritzgussverfahrens das an eine Metallplatte anzuspritzende Dichtungselement den innenliegenden Rand der Durchgangsöffnung vollständig umschließt. Dabei ist insbesondere vorgesehen, das Dichtungselement als Elastomer-Dichtungselement auszubilden. Als Dichtungsmaterial kommen insbesondere thermoplastische Elastomere unterschiedlicher Härtegrade sowie thermoplastische Kunststoffe, vernetzte Polymere, im Ein- oder Mehrkomponenten-Spritzgussverfahren infrage.

Durch das Anspritzen der Kunststoffdichtungen an die Bipolar- oder Elektrodenplatte kann eine separate Montage der Dichtungselemente an der Platte entfallen. Insbesondere können die sich beidseitig an Ober- und Unterseite der Platte abstützenden verbreiterten Abstützabschnitte ihrem Anforderungsprofil entsprechend ausgebildet werden. Denn es ist nicht erforderlich, etwa unter einem Zusammenquetschen eines der beiden, vorzugweise radial verbreiterten Abstützabschnitte das Dichtungselement durch die in der Platte ausgebildete Durchgangsöffnung hindurchzuzwängen.

Des Weiteren ist vorgesehen, dass der Abstützabschnitt, insbesondere der am Oberteil ausgebildete Abstützabschnitt im seinem Übergangsbereich zum angrenzenden Fortsatz, eine umlaufende Anlageschulter für die Membran aufweist. Insoweit dient der radial verbreiterte Abstützabschnitt des Oberteils zugleich als Abstandshalter zwischen Membran bzw. MEA und der Platte, während der die Membran durchsetzende, verjüngt ausgebildete Fortsatz die in der Membran ausgebildete Durchgangsöffnung durchsetzt.

Nach einer Weiterbildung der Erfindung ist vorgesehen, dass der Fortsatz als Zapfen, insbesondere zylindrischer oder konischer Geometrie ausgebildet ist.

Entsprechend kann vorgesehen sein, dass die zur Aufnahme des Fortsatzes ausgebildete Aufnahme des Dichtungsunterteils in entsprechender Weise konisch oder zylindrisch ausgebildet ist.

Durch die konische Ausgestaltung kann insbesondere ein Klemmsitz zwischen den Bereichsweise ineinandergreifenden Dichtungselementen erzielt werden, sodass der durch das Dichtungselement hindurchführende Führungskanal für das Reaktionsmedium nach außen hin gasdicht verschlossen ist.

Nach einer vorteilhaften Weiterbildung der Erfindung ist vorgesehen, dass die Anlageschulter des Abstützabschnittes des Oberteils und/oder ein die Aufnahme begrenzender Randabschnitt des Unterteils des Dichtungselements mit der daran anliegenden bzw. zwischen Randabschnitt und Anlageschulter anzuordnenden Membran flächendichtend ausgebildet ist. Dabei soll das Dichtelement insbesondere ein unkontrolliertes Eindringen von Reaktionsmedien, etwa Wasserstoff oder Sauerstoff in den Gasraum verhindern.

Die Geometrie des Randabschnitts des Unterteils als auch der am Abstützabschnitt des Oberteils ausgebildeten Anlageschulter kann sowohl an den Pressdruck als auch an die Härte des verwendeten Elastomer-Kunststoffs individuell angepasst sein. Die Parameter Pressdruck, Geometrie von Randabschnitt und Anlageschulter sowie Materialhärte und Verformbarkeit des Materials stehen in einer direkten Wechselbeziehung zueinander.

Hierbei gilt grundsätzlich, dass bei verhältnismäßig hohen aufzuwendenden Zug- oder Druckbeanspruchungen insbesondere beim Zusammenfügen des Brennstoffzellenstapels, das verwendete Kunststoffmaterial eine ausreichende Härte bzw. Kompressibilität aufweist. Zudem ist die Geometrie und Größe der an den Kunststoffdichtungen vorgesehenen Dichtflächen zu berücksichtigen. Bei einer verhältnismäßig kleinen Anlagerfläche zwischen Dichtung und Membranoberfläche kann der zum Zusammenfügen des Brennstoffzellenstabes aufzuwendende Druck etwas geringer gewählt werden als dies bei einer verhältnismäßig großen Dichtfläche der Fall ist.

Nach einer weiteren vorteilhaften Ausgestaltung der Erfindung ist zudem vorgesehen, dass die Platte mit einem umlaufenden Dichtungsrahmen aus Elastomer-Kunststoff versehen ist, wobei der Dichtungsrahmen sich quer oder senkrecht zur Plattenebene erstreckende Formschlusselemente aufweist. Mittels solcher Formschlusselemente kann in besonders einfacher Art und Weise eine Lagefixierung und Montageerleichterung für aufeinander anzuordnende Bipolarplatten zur Verfügung gestellt werden.

Dabei ist insbesondere denkbar, dass die umlaufende Elastomer-Dichtung einen Außenrand der Platte im Wesentlichen vollständig umschließt, sodass beim Übereinanderstapeln von einzelnen Platten die daran vorgesehenen Dichtungen unmittelbar aneinander angrenzen und mit ihren miteinander korrespondierenden Formschlusselementen ineinander greifen. Auf diese Art und Weise kann eine Lagefixierung und Montageerleichterung für aufeinander anzuordnende Bipolarplatten zur Verfügung gestellt werden. Dies ist insbesondere dann von Vorteil, wenn die Elektronen- oder Bipolarplatten sowohl mit einer reaktionsmedienführenden Dichtung als auch mit randseitigen Dichtung in einem einzigen oder mit aufeinanderfolgenden Spritzprozessen in Ein- oder Mehrkomponenten-Spritztechnologie vorgefertigt oder vorkonfektioniert werden.

Dabei ist insbesondere vorgesehen, dass auch die im Randbereich vorgesehenen Dichtungen und/oder die an der Dichtung ausgebildeten, vorzugsweise einstückig mit der Dichtung verbundenen Formschlusselemente plattenunter- und plattenoberseiten-spezifische Formschlusselemente aufweisen, sodass bspw. die an einer Plattenunterseite vorgesehenen Formschlussmittel mit den an einer benachbarten darunterliegenden Platte plattenoberseitig vorgesehenen Formschlussmittel korrespondierend in Eingriff gelangen können.

Die miteinander korrespondierenden Formschlusselemente der umlaufenden Dichtung können einen trapezartigen und/oder zumindest bereichsweise konischen Querschnitt aufweisen. Auch kann vorgesehen werden, die einzelnen Formschlusselemente mit konvex oder konkav gewölbten Querschnittsprofilen zu versehen. Dabei ist insbesondere denkbar, dass zum Beispiel bei einer trapezartigen Ausgestaltung der Anstellwinkel von Wangenflächen einer Aufnahme kleiner ist als der Anstellwinkel der Flanken des mit der Aufnahme korrespondierenden Vorsprungs.

Da auch die umlaufende Dichtung aus einem Elastomer-Kunststoff gebildet ist, kann insbesondere bei Ausübung einer vorgesehenen Drucks, vorzugsweise in Richtung der Flächennormalen der aufeinander zu stapelnden Bipolar- oder Elektrodenplatten eine ausreichende Dichtigkeit der einzelnen Brennstoffzelleneinheiten zur Verfügung gestellt werden.

Nach einer weiteren Ausgestaltung der Erfindung ist vorgesehen, dass an der Dichtung zumindest eine im Wesentlichen in der Plattenebene oder parallel zur Plattenebene ausgebildete und an den Innenrand der umlaufenden Dichtung angrenzende Ausnehmung oder ein entsprechender Vorsprung vorgesehen ist. Diese Ausnehmung ist zur Aufnahme eines an der Membran oder der MEA angeordneten Vorsprungs oder eines daran befestigten vom Seitenrand hervorstehenden Befestigungselements ausgebildet. Hierdurch kann eine Montagesicherung bzw. Positionsfixierung der Membran zusätzlich zu der Positionierfunktion des Dichtelements zur Verfügung gestellt werden. Ferner wird hierdurch ein formschlüssiges Einpassen einer Membran oder einer MEA an einer mit einer umlaufenden Dichtung versehenen Bipolarplatte oder entsprechend ausgestalteten Elektrodenplatte ermöglicht.

Weiterhin ist vorgesehen, dass das einen für das Reaktionsmedium ausgebildeten Führungskanal aufweisende Dichtelement in den umlaufenden Dichtungsrahmen integriert ist. Dichtungsrahmen und Dichtungselement können erfindungsgemäß in einem Ein - oder Mehrkomponenten-Spritzgießprozess unmittelbar an die Platte angespritzt werden, sodass eine separate Montage von Dichtungsrahmen und Dichtelement in vorteilhafter Weise entfallen kann.

Nach einem weiteren unabhängigen Aspekt betrifft die Erfindung ein Dichtungselement für die zuvor beschriebene Platte, welches einen innenliegenden Führungskanal zum Transport eines Reaktionsmediums eines Brennstoffzellen- oder Elektrolyseurstapels aufweist. Das Dichtungselement ist mit einem Einsatz versehen, mit welchem das Dichtungselement zumindest bereichsweise in eine Durchgangsöffnung einer Bipolar- oder Elektrodenplatte einsetzbar ist. Ferner ist angrenzend an den Einsatz ein gegenüber der Durchgangsöffnung verbreiterter Abstützabschnitt vorgesehen. Dieser dient als Auflage und zugleich als Positioniermittel oder Positionierhilfe für eine benachbart zur Platte anzuordnende Membran oder eine Membran-Elektroden-Anordnung (MEA).

### Ausführungsbeispiele

Weitere Ziele, Merkmale sowie vorteilhafte Anwendungsmöglichkeiten der Erfindung werden unter Bezugnahme auf die Zeichnungen anhand von Ausführungsbeispielen erläutert. Dabei bilden sämtliche wörtlich beschriebenen als auch bildlich dargestellten Merkmale sowohl in Alleinstellung als auch in jeglicher sinnvollen Kombination untereinander den Gegenstand der vorliegenden Erfindung; auch unabhängig von den Patentansprüchen und deren Rückbezügen.

### Es zeigen:

- Fig. 1: eine schematische Darstellung eines in einer Durchgangsöffnung eingesetzten Dichtungselements im Querschnitt,
- Fig. 2: eine vergrößerte Darstellung zweier Dichtungselemente, die in Höhe einer Membran aufeinanderstoßen,
- Fig. 3: eine vergrößerte Detailansicht des Stoßbereichs gemäß Fig. 2,
- Fig. 4: eine Ausführungsvariante des Dichtungsabschnitts zwischen Dichtelementen und Membran,
- Fig. 5: eine weitere Ausgestaltung des Dichtungsabschnitts mit konisch verjüngten Dichtungszapfen,

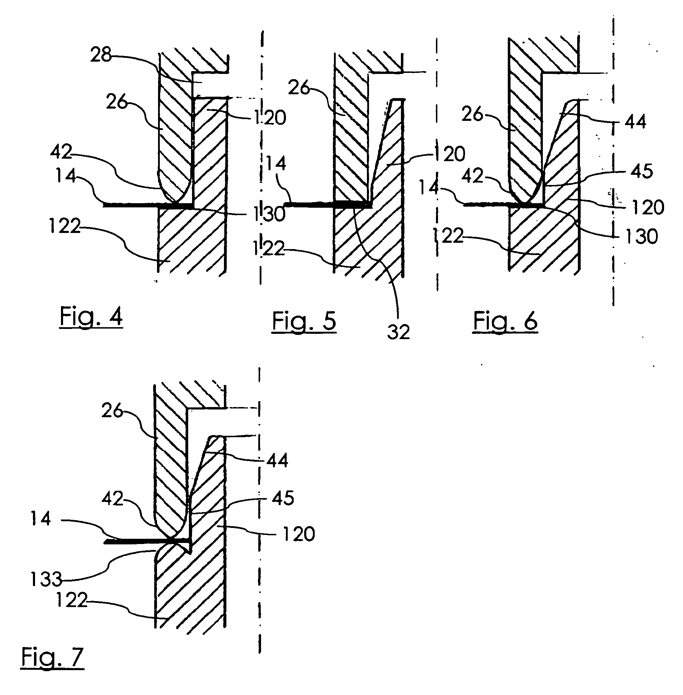

- Fig. 5: eine weitere Ausgestaltung des Dichtungsabschnitts mit konisch verjüngten Dichtungszapfen,
- Fig. 6: eine weitere Ausgestaltung des Dichtungsabschnitts mit einer am Unterteil des Dichtelements abgerundet ausgebildeten Dichtfläche,
- Fig. 7: einen Dichtungsabschnitt mit zwei gegenüberliegenden abgerundeten Dichtflächen und

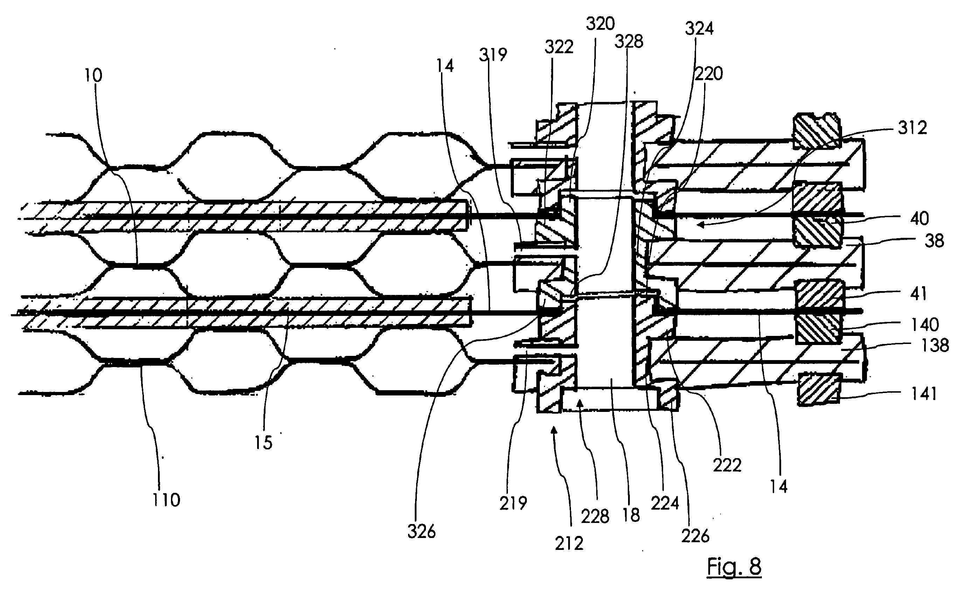

- Fig. 8: eine schematische Darstellung von drei aufeinandergestapelten und mit Dichtrahmen und Dichtelementen versehenen Bipolarplatten.

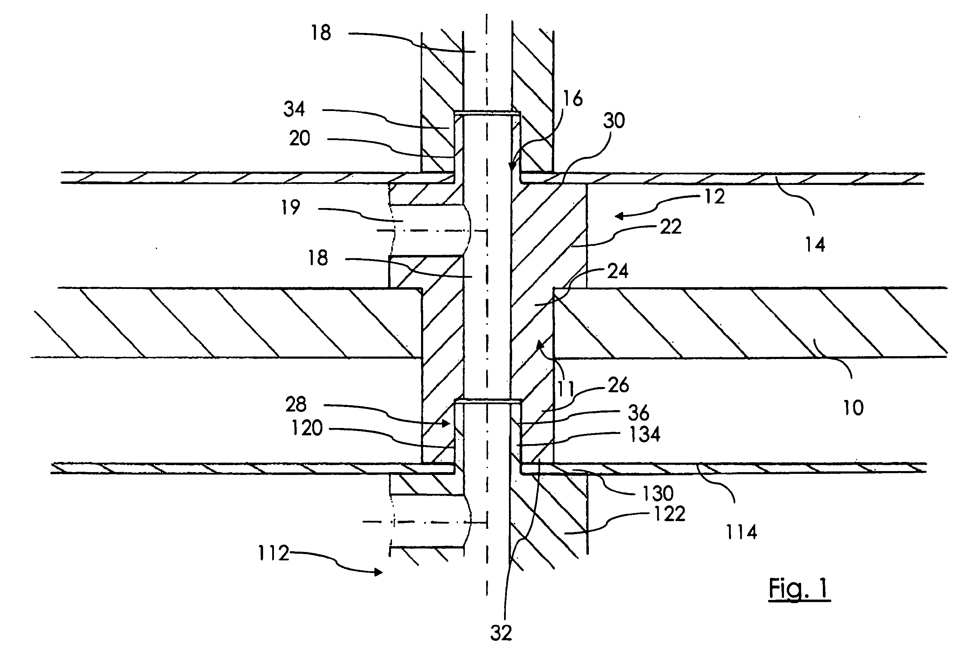

In Fig. 1 ist ein erstes Ausführungsbeispiel eines Dichtelements 12 gezeigt, welches einen Einsatz 24 aufweist, mit dem es in einer Durchgangsöffnung 11 einer Bipolar- oder Elektrodenplatte 10 eines Brennstoffzellenstapels zu liegen kommt. Das Dichtungselement 12 ist dabei als ein die Platte 10 durchsetzendes Dichtungselement ausgebildet. Es weist ein mit einem Abstützabschnitt 22 versehenes Oberteil und ein von der Unterseite der Platte 10 hervor ragendes Unterteil 26 auf.

Bei einer kreisrunden Durchgangsöffnung 11 und einer dadurch bedingten Zylindergeometrie des Dichtelementes 12 ist der am Oberteil des Dichtelements 12 ausgebildete Abstützabschnitt 22 radial gegenüber dem Einsatz 24 und gegenüber der Durchgangsöffnung 11 verbreitert ausgebildet. Mittig durch das Dichtungselement 12 verläuft ein Führungskanal 18 für das zwischen den einzelnen übereinander zu stapelnden Platten 10 hindurch zuleitende Reaktionsmedium, etwa Wasserstoff oder Sauerstoff.

Der Abstützabschnitt 22 des Oberteils ist flanschartig ausgebildet und weist an seiner Unterseite eine Anlagefläche auf, mit welcher sich das Dichtelement 12 an der Oberseite der Platte 10 abdichtend abstützen kann. An dem anderen, in

Nach oben angrenzend an den radial verbreiterten Abstützabschnitt 22 ist ein nach Art eines Zapfens ausgebildeter Fortsatz 20 vorgesehen, welcher in Montagestellung eine in der Membran 14 ausgebildete Durchgangsöffnung 16 durchsetzt. Dieser zapfenartige Fortsatz 20 dient neben der Schaffung einer gasdichten Dichtung als Montage- und Positionierhilfe beim Zusammenfügen des Brennstoffzellenstapels. Insbesondere gibt der zapfenartige Fortsatz 20 die Positionierung der Membran 14 bezüglich der Ausrichtung in der Plattenebene vor.

Das Unterteil 26 der Dichtung 12, welche von der Unterseite der Platte 10 hervor ragt, weist an seinen unten liegenden Endabschnitt eine Aufnahme 28 für den zapfenartigen Fortsatz 120 eines darunterliegenden Dichtungselements 112 einer benachbarten, in Figur 1 nicht explizit gezeigten Bipolarplatte auf. Jedes Dichtungselement 12, 112 weist somit an seinem oben und unten liegenden Endabschnitt einander korrespondierende Formschlussmittel auf.

Die in Fig. 1 dargestellte Ausführungsform des Dichtungselements 12 ermöglicht ein Einsetzen des Dichtungselements 12 in die an der Platte 10 ausgebildete Durchgangsöffnung 11 von oben. Im Unterschied dazu ist bei der Ausführungen gemäß der Fig. 8 das Unterteil 226 der Dichtungen 212 gegenüber dem Einsatz 224 verbreitert ausgebildet. Bei dieser Ausgestaltung nach Fig. 8 ist insbesondere vorgesehen, das Dichtungselemente 212, 312 an die Bipolarplatten 110, 10 unmittelbar anzuspritzen. Dies kann insbesondere in einem Ein- oder Mehrkomponenten-Spritzgießverfahren erfolgen, in welchem auch weitere randseitige Dichtelemente 38, 138 oder umlaufende mit Formschlussmitteln versehene Dichtelemente 40, 41, 140, 141 mit der Platte 10, 110 verbunden werden können.

So ist nach der Ausführung gemäß Fig. 8 insbesondere vorgesehen, dass die in der Bipolarplatte 10 gebildete Durchgangsöffnung 11 zunächst mit einem ersten Kunststoff bzw. einer Kunststoffummantelung 38 versehen wird, welche wiederum mit dem Dichtungselement 312, 212 umspritzt wird.

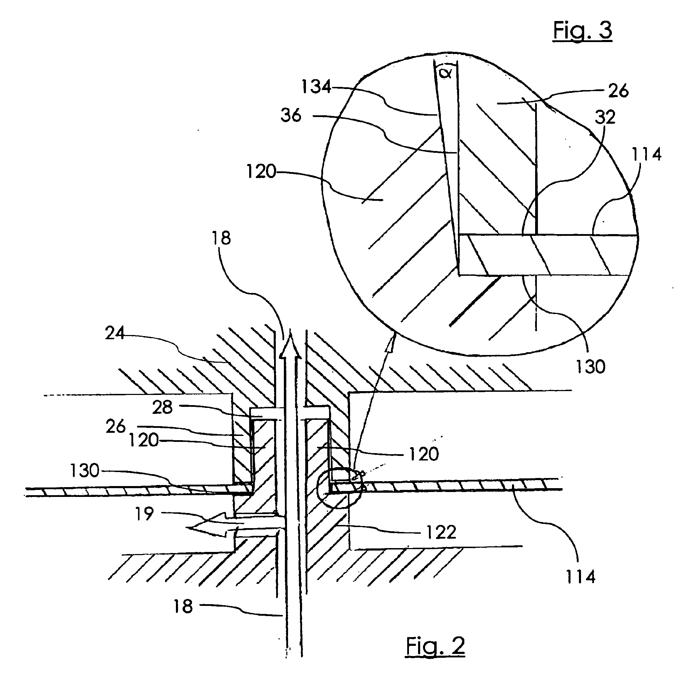

Die in Fig. 8 verwendeten Bezugszeichen sind, soweit sie weitere Einzelmerkmale der Dichtung oder der Bipolarplatten zeigen, gegenüber den Darstellungen gemäß Fig. 1 und 2 um 100 bzw. 200 Zähler erhöht. Sie bezeichnen ansonsten aber gleichwirkende und identisch zu bezeichnende Merkmale der Dichtungen.

Fig. 2 und ihr vergrößerter Ausschnitt gemäß Fig. 3 zeigen die Flächenpressung der axialen bzw. in Vertikalrichtung liegenden Endabschnitte benachbart angeordneter Dichtungselemente 12, 112 und der dazwischenliegenden Membran 114. Die Membran 114 liegt mit ihrer Unterseite auf der umlaufenden, als Dichtfläche 130 ausgebildeten Anlageschulter des unteren Dichtungselements 112 auf.

Die in der Membran 114 gebildete Durchgangsöffnung ist dabei von dem zapfenartigen Fortsatz 120 von unten her durchsetzt. Der Fortsatz 120 kommt innerhalb einer an der Unterseite der darüberliegenden Dichtung 12 ausgebildeten Aufnahme 28 zu liegen, wobei der untere Endabschnitt des Aufnahmerands als Dichtfläche 32 ausgebildet ist. Wie anhand Fig. 3 ersichtlich, sind die an den Dichtungselementen 12, 112 ausgebildeten Dichtflächen 32, 130 im Wesentlichen als Flächendichtung ausgebildet und gelangen nahezu vollflächig mit Ober- und Unterseite der Membran 114 zur Anlage.

Des Weiteren kann vorgesehen sein, den zapfenartigen Fortsatz 120 als auch die damit korrespondierende Aufnahme 28 konisch verjüngend auszubilden, was durch den Konuswinkel α und die beiden gegenüber der Vertikalen geneigten Konusflächen 134, 36, gemäß Fig. 3, verdeutlicht wird. Insbesondere anhand der konischen Ausgestaltung des zapfenartigen Vorsprungs 120 kann eine Zentrier- und Positionierhilfe für die mit ihrer Durchgangsöffnung 16 auf den Fortsatz von oben aufzuschiebende Membran 14 geschaffen werden.

Eine fluchtende Ausrichtung der Durchgangsöffnung 16 der Membran 14 gegenüber dem oben liegenden freien Endabschnitt eines konischen Zapfens 120 gestaltet sich verhältnismäßig einfach, da der Außendurchmesser des Zapfens 120 an seinem oben liegenden freien Endabschnitt geringer als der Durchmesser der in der Membran gebildeten Durchgangsöffnung ist und auch kleiner als der Außendurchmesser des Zapfen an dessen Fußabschnitt ist im Bereich der vom Abstützabschnitt 122 gebildeten Anlageschulter ist.

Ferner ist in den Figuren 1, 2 und 8 ein seitlicher Auslasskanal 19 angedeutet, über welchen das in Vertikalrichtung entlang des Führungskanals 18 geleitete Reaktionsmedium zwischen Bipolarplatte 10 und Membran 14 geleitet werden kann.

Der Führungskanal 18 ist dabei ausschließlich für eines der beiden Reaktionsmedien vorgesehen, während das andere Reaktionsmedium in einem anderen Bereich der Brennstoffzellenanordnung in entsprechender Art und Weise geführt wird.

Die Figuren 4 bis 7 zeigen verschiedene Ausgestaltungen von Flächendichtungen im Stoßbereich zweier übereinander und bereichsweise ineinandergreifender Dichtelemente auf. Gemäß Fig. 4 ist vorgesehen, dass der eine Aufnahme 28 begrenzende Rand 42 eines Dichtelement-Unterteils spitz, abgerundet und/oder konisch ausgebildet ist. Bei Aufwendung eines Zuspanndrucks kann aufgrund der verhältnismäßig geringen Anlagefläche zwischen dem Dichtungsrand 42 und der darunterliegenden Membran 14 ein vergleichsweise hoher Anpressdruck erzeugt werden. Die Gegendruckfläche 130 eines radial verbreiterten Abstützabschnitts 122 eines darunterliegenden Dichtungselements 112 ist dabei im Wesentlichen eben ausgebildet. Der in die Aufnahme 28 hineinragende Zapfen 120 weist ein im Wesentlichen zylindrisches Profil auf.

In Fig. 5 ist eine Ausführungsvariante dargestellt, bei welcher die Dichtungsränder 43, 130 im Wesentlichen eben ausgebildet sind, sodass bei gleichbleibendem Außendruck ein geringerer Pressdruck auf die Membran 14 in Montagestellung ausgeübt wird. Deutlich zu erkennen ist hierbei die verhältnismäßig stark konisch zulaufende Ausgestaltung des zapfenartigen Fortsatzes 120.

Die Ausgestaltung gemäß Fig. 6 zeigt eine weitere Ausführungsvariante, wobei der Fortsatz 120 in seinem unteren, an die Auflagefläche 130 angrenzenden Abschnitt 45 nahezu zylindrisch und in einem sich daran nach oben hin anschließenden Abschnitt 44, konisch verjüngend ausgebildet ist. Das Unterteil 26 der oberen Dichtung ist abgerundet oder spitz zulaufend mit einer verringerten Anlagefläche, vergleichbar der Ausgestaltung gemäß Fig. 4 ausgestattet.

Figur 7 zeigt eine weitere Ausführungsvariante, wobei im Unterschied zur Fig. 6 die untere Anlageschulter 133 im gegenüberliegenden abgerundeten Dichtungsrand 42 ausgebildet ist. Auf diese Art und Weise kann beidseits der Membran 14 aufgrund der verringerten Anlage- bzw. Dichtfläche ein erhöhter Anpressdruck ausgebildet zur Verfügung gestellt werden.

Die gezeigten unterschiedlichen Ausgestaltungen der in den Figuren 4 bis 7 gezeigten Dichtungen ermöglichen die Anwendung von Elastomer-Kunststoffmaterialien mit unterschiedlichen Elastizitätsmodulen und Härtegraden.

### Bezugszeichenliste

- 10: Bipolar- oder Elektrodenplatte
- 11: Durchgangsöffnung
- 12: Dichtungselement
- 14: Membran
- 15: Membran-Elektroden-Anordnung
- 16: Durchgangsöffnung
- 18: Versorgungskanal
- 19: Kanalabzweigung
- 20: Fortsatz
- 22: Abstützabschnitt
- 24: Einsatz
- 26: Fortsatz
- 28: Aufnahme
- 30: Dichtfläche
- 31: Dichtfläche
- 32: Dichtfläche
- 34: Konusfläche
- 36: Konus
- 38: Dichtung
- 40: Umlaufende Dichtung
- 41: Umlaufende Dichtung
- 42: Dichtungsrand
- 44: Flächenabschnitt
- 45: Flächenabschnitt
- 112: Dichtungselement
- 114: Membran
- 110: Bipolar- oder Elektrodenplatte
- 120: Fortsatz
- 122: Abstützabschnitt
- 130: Dichtfläche
- 133: Dichtfläche
- 134: Dichtfläche
- 138: Dichtung
- 140: Umlaufende Dichtung
- 141: Umlaufende Dichtung
- 212: Dichtungselement
- 219: Kanalabzweigung
- 220: Fortsatz
- 222: Abstützabschnitt
- 224: Einsatz
- 226: Fortsatz
- 228: Aufnahme
- 312: Dichtungselement
- 319: Kanalabzweigung
- 320: Fortsatz
- 322: Abstützabschnitt
- 324: Einsatz
- 326: Fortsatz
- 328: Aufnahme

## Patentansprüche

1. Bipolar- oder Elektrodenplatte für Brennstoffzellen- oder Elektrolyseurstapel mit in der Plattenebene verlaufenden Kanälen zur Führung von zumindest einem Reaktionsmedium und mit zumindest einer Durchgangsöffnung (11) zur Zu- oder Abfuhr des Reaktionsmediums, wobei im Bereich der Durchgangsöffnung (11) ein zumindest bereichsweise in die Durchgangsöffnung hineinragendes Dichtungselement (12, 112; 212, 312) angeordnet ist, welches einen schräg oder senkrecht zur Plattenebene verlaufenden Führungskanal (18) für das Reaktionsmedium aufweist, **dadurch gekennzeichnet, dass** das Dichtungselement (12) an einem Oberteil einen gegenüber der Durchgangsöffnung (11) verbreiterten Abstützabschnitt (22, 122; 222; 322) aufweist, mit welchem sich das Dichtungselement (12, 112; 212, 312) an der Platte (10, 110) abstützt und eine Auflage als auch Positionierhilfe für eine benachbart und parallel zur Platte (10,110) anzuordnende Membran (14, 114) oder eine Membran Elektroden Anordnung (15) bildet, wobei nach oben angrenzend an den Abstützabschnitt ein nach Art eines Zapfens ausgebildeter Fortsatz (20, 120; 220, 320) vorgesehen ist, mittels welchem eine in der Membran (14, 114) ausgebildete Durchgangsöffnung (16) durchsetzbar ist.

2. Platte nach dem vorhergehenden Anspruch, wobei das Dichtungselement (12) angrenzend an den Abstützabschnitt (22, 122; 222, 322) einen gegenüber dem Abstützabschnitt verjüngt ausgebildeten Fortsatz (20, 120; 220, 320) aufweist, welcher in Montagestellung in einem Brennstoffzellen- oder Elektrolyseurstapel eine in der Membran (14, 114) ausgebildete Durchgangsöffnung (16) durchsetzend zu liegen kommt.

3. Platte nach einem der vorhergehenden Ansprüche, wobei das Dichtungselement (12, 312) die Durchgangsöffnung der Platte durchsetzt und ein dem Abstützabschnitt (22, 322) abgewandtes und von der Unterseite der Platte hervor stehendes Unterteil (26, 326) aufweist, an welchem eine Aufnahme (28; 328) für den Fortsatz (120; 220) eines benachbart angeordneten Dichtungselements (112; 212) ausgebildet ist.

4. Platte nach einem der vorhergehenden Ansprüche, wobei das Unterteil (226, 326) des Dichtungselements (212, 312) einen gegenüber der lichten Weite der Durchgangsöffnung (11) der Platte verbreiterten Querschnitt aufweist.

5. Platte nach einem der vorhergehenden Ansprüche, wobei das Dichtungselement (12, 112; 212, 312) mittels eines Ein-, Zwei- oder Mehrkomponenten-Spritzgussverfahrens zur Bildung eines Metall-Kunststoff-Verbunds an die Platte (10, 110) angespritzt ist.

6. Platte nach einem der vorhergehenden Ansprüche 2 bis 5, wobei der Abstützabschnitt (22, 122; 222, 322) im Übergangsbereich zum verjüngt ausgebildeten Fortsatz (20, 120; 220, 320) eine umlaufende als Dichtfläche ausgebildete Anlageschulter (30, 130) für die Membran (14) aufweist.

7. Platte nach einem der vorhergehenden Ansprüche 2 bis 6, wobei der Fortsatz (20, 120; 220, 320) als zylindrischer oder konischer Zapfen ausgebildet ist.

8. Platte nach einem der vorhergehenden Ansprüche 3 bis 7, wobei die Aufnahme (28, 128; 228, 328) der Geometrie des Fortsatzes (20, 120; 220, 320) entsprechend zylindrisch oder konisch ausgebildet ist.

9. Platte nach einem der vorhergehenden Ansprüche, wobei die Anlageschulter (30, 130) des Abstützabschnitts (22, 122) und/oder ein die Aufnahme (28, 128) begrenzender Randabschnitt des Unterteils (26, 126) des Dichtungselements (12, 112) mit der daran anliegenden Membran (14, 114) flächendichtend ausgebildet ist.

10. Platte nach einem der vorhergehenden Ansprüche, wobei an einem außen liegenden Randbereich der Platte (10) ein umlaufender Dichtungsrahmen (38, 138) mit quer oder senkrecht zur Plattenebene erstreckenden Formschlusselementen (40, 41, 140, 141) vorgesehen ist.

11. Platte nach Anspruch 10, wobei der Dichtungsrahmen (38, 138) zumindest eine parallel zur Plattenebene ausgebildete und an seinen Innenrand angrenzende Ausnehmung oder ein zapfenartig ausgebildetes Formschlusselement zur Fixierung einer benachbart zur Platte anzuordnenden Membran (14) oder Membran-Elektroden-Anordnung (15) aufweist.

12. Platte nach einem der vorhergehenden Ansprüche 10 oder 11, wobei das Dichtelement (12,112) in den Dichtungsrahmen (38, 138) integriert ist.

13. Brennstoffzellen- oder Elektrolyseurstapel der wenigstens zwei Platten (10; 110) nach einem der vorhergehenden Ansprüche aufweist.

## Claims

1. Bipolar plate or electrode plate for a fuel cell stack or electrolyser stack, having channels extending in the plate plane for guiding at least one reaction medium and having at least one passage opening (11) for supplying or discharging the reaction medium, wherein a sealing element (12, 112; 212, 312) that projects at least regionally into the passage opening is arranged in the region of the passage opening (11), said sealing element (12, 112; 212, 312) having a guide channel (18) for the reaction medium, extending obliquely or perpendicularly to the plate plane, **characterized in that** the sealing element (12) has on a top part a supporting section (22, 122; 222; 322) which is widened with respect to the passage opening (11), the sealing element (12, 112; 212, 312) being supported on the plate (10, 110) by way of said supporting section (22, 122; 222; 322) and forming a support and also a positioning aid for a membrane (14, 114), to be arranged adjacent to and parallel to the plate (10, 110), or a membrane-electrode arrangement (15), wherein a protrusion (20, 120; 220, 320) formed in the manner of a peg is provided in a manner adjoining the supporting section at the top, said protrusion (20, 120; 220, 320) being able to pass through a passage opening (16) formed in the membrane (14, 114).

2. Plate according to the preceding claim, wherein the sealing element (12) has, adjoining the supporting section (22, 122; 222, 322), a protrusion (20, 120; 220, 320) that is formed in a tapering manner with respect to the supporting section, said protrusion (20, 120; 220, 320) resting in a manner passing through a passage opening (16) formed in the membrane (14, 114) in the position fitted in a fuel cell stack or electrolyser stack.

3. Plate according to either of the preceding claims, wherein the sealing element (12, 312) passes through the passage opening in the plate and has a lower part (26, 326) remote from the supporting section (22, 322) and protruding downwards from the underside of the plate, a receptacle (28; 328) for the protrusion (120; 220) of an adjacently arranged sealing element (112; 212) being formed on said lower part (26, 326).

4. Plate according to one of the preceding claims, wherein the lower part (226, 326) of the sealing element (212, 312) has a cross section which is widened with respect to the clear width of the passage opening (11) in the plate.

5. Plate according to one of the preceding claims, wherein the sealing element (12, 112; 212, 312) is injection-moulded onto the plate (10, 110) by means of a one-, two- or multi-component injection-moulding method in order to form a metal-plastic composite.

6. Plate according to one of the preceding Claims 2 to 5, wherein the supporting section (22, 122; 222, 322) has, in the transition region to the tapering protrusion (20, 120; 220, 320), a circumferential abutment shoulder (30, 130), in the form of a sealing surface, for the membrane (14).

7. Plate according to one of the preceding Claims 2 to 6, wherein the protrusion (20, 120; 220, 320) is in the form of a cylindrical or conical peg.

8. Plate according to one of the preceding Claims 3 to 7, wherein the receptacle (28, 128; 228, 328) is formed in a cylindrical or conical manner corresponding to the geometry of the protrusion (20, 120; 220, 320).

9. Plate according to one of the preceding claims, wherein the abutment shoulder (30, 130) of the supporting section (22, 122) and/or a peripheral section, adjoining the receptacle (28, 128), of the lower part (26, 126) of the sealing element (12, 112) is formed in a surface-sealing manner with the adjoining membrane (14, 114).

10. Plate according to one of the preceding claims, wherein a circumferential sealing frame (38, 138) having form-fitting elements (40, 41, 140, 141) extending transversely or perpendicularly to the plate plane is provided on an external peripheral region of the plate (10).

11. Plate according to Claim 10, wherein the sealing frame (38, 138) has at least one recess formed parallel to the plate plane and adjoining the inner periphery of said sealing frame (38, 138), or a form-fitting element, formed in a peg-like manner, for fixing a membrane (14), to be arranged adjacent to the plate, or membrane-electrode arrangement (15).

12. Plate according to either of the preceding Claims 10 and 11, wherein the sealing element (12, 112) is integrated into the sealing frame (38, 138).

13. Fuel cell stack or electrolyser stack which has at least two plates (10; 110) according to one of the preceding claims.

## Revendications

1. Plaque bipolaire ou d'électrode pour pile de cellules à combustible ou pile d'électrolyseur, présentant
des canaux qui s'étendent dans le plan de la plaque et qui guident au moins un fluide de réaction et
au moins une ouverture de passage (11) qui permet d'amener et d'évacuer le fluide de réaction,
un élément d'étanchéité (12, 112; 212, 312) qui présente pour le fluide de réaction un canal de guidage (18) qui s'étend obliquement ou perpendiculairement au plan de la plaque étant disposé au niveau de l'ouverture de passage (11) et débordant au moins en partie dans l'ouverture de passage,
**caractérisée en ce que**
l'élément d'étanchéité (12) présente sur une partie supérieure une partie de soutien (22, 122; 222; 322) élargie par rapport à l'ouverture de passage (11) et par laquelle l'élément d'étanchéité (12, 112; 212, 312) s'appuie sur la plaque (10, 110) et forme un appui ainsi qu'un accessoire de positionnement pour une membrane (14, 114) destinée à être placée au voisinage de la plaque (10, 110) et parallèlement à cette dernière ou pour un ensemble (15) d'électrode et de membrane, un prolongement (20, 120; 220, 320) configuré en tourillon adjacent dans le haut à la partie de soutien et au moyen duquel une ouverture de passage (16) formée dans la membrane (14, 114) peut être traversée étant prévu.

2. Plaque selon la revendication précédente, dans laquelle l'élément d'étanchéité (12) présente en position adjacente à la partie de soutien (22, 122; 222, 322) un prolongement (20, 120; 220, 320) qui se rétrécit par rapport à la partie de soutien et qui vient se placer de manière à traverser une ouverture de passage (16) formée dans la membrane (14, 114) lorsque la plaque est en position de montage dans une pile de cellules à combustible ou une pile d'électrolyseur.

3. Plaque selon l'une des revendications précédentes, dans laquelle l'élément d'étanchéité (12, 312) traverse l'ouverture de passage de la plaque et présente une partie inférieure (26, 326) qui n'est pas tournée vers la partie de soutien (22, 322), qui déborde du côté inférieur de la plaque et sur laquelle un logement (28; 328) est formé pour le prolongement (120; 220) d'un élément d'étanchéité (112; 212) disposé au voisinage.

4. Plaque selon l'une des revendications précédentes, dans laquelle la partie inférieure (226; 326) de l'élément d'étanchéité (212, 312) présente une section transversale plus grande que la largeur intérieure de l'ouverture de passage (11) de la plaque.

5. Plaque selon l'une des revendications précédentes, dans laquelle l'élément d'étanchéité (12, 112; 212, 312) est injecté sur la plaque (10, 110) au moyen d'une opération de moulage par injection à un, deux ou plusieurs composants, pour former un composite métal-matière synthétique.

6. Plaque selon l'une des revendications 2 à 5 qui précèdent, dans laquelle la partie de soutien (22, 122; 222, 322) présente pour la membrane (14) un épaulement périphérique de pose (30, 130) configuré comme surface d'étanchéité dans la partie de transition par rapport au prolongement (20, 120; 220, 320) rétréci.

7. Plaque selon l'une des revendications 2 à 6 qui précèdent, dans laquelle le prolongement (20, 120; 220, 320) est configuré comme tourillon cylindrique ou conique.

8. Plaque selon l'une des revendications 3 à 7 qui précèdent, dans laquelle le logement (28, 128; 228, 328) a une configuration cylindrique ou conique qui correspond à la géométrie du prolongement (20, 120; 220, 320).

9. Plaque selon l'une des revendications précédentes, dans laquelle l'épaulement de pose (30, 130) de la partie de soutien (22, 122) et/ou une bordure, qui délimite le logement (28, 128), de la partie inférieure (26, 126) de l'élément d'étanchéité (12, 112) sont configurés de manière à assurer une étanchéité de surface avec la membrane (14, 114) qui y repose.

10. Plaque selon l'une des revendications précédentes, dans laquelle un encadrement périphérique d'étanchéité (38, 138) qui présente des éléments (40, 41, 140, 141) en correspondance de forme qui s'étendent transversalement ou perpendiculairement par rapport au plan de la plaque est prévu sur une partie périphérique extérieure de la plaque (10).

11. Plaque selon la revendication 10, dans laquelle le cadre d'étanchéité (38, 138) présente au moins une découpe formée parallèlement au plan de la plaque et adjacente à son bord intérieur ou un élément en correspondance géométrique configuré en forme de tourillon, pour une membrane (14) ou un ensemble (15) de membrane-électrode qui doivent être placés au voisinage de la plaque.

12. Plaque selon l'une des revendications 10 ou 11 qui précèdent, dans laquelle l'élément d'étanchéité (12, 112) est intégré dans le cadre d'étanchéité (38, 138).

13. Pile de cellules à combustible ou pile d'électrolyseur présentant au moins deux plaques (10; 110) selon l'une des revendications précédentes.
